Europäisches Patentamt

European Patent Office

Office européen des brevets

(19)

(11) Numéro de publication : **0 007 827**
**B1**

(12) **FASCICULE DE BREVET EUROPÉEN**

(45) Date de publication du fascicule du brevet :
17.06.81

(51) Int. Cl.³ : **G 01 C 19/64, H 01 S 3/083**

(21) Numéro de dépôt : **79400442.4**

(22) Date de dépôt : **29.06.79**

(54) **Gyromètre à laser.**

(30) Priorité : **21.07.78 FR 7821713**

(43) Date de publication de la demande :
**06.02.80 (Bulletin 80/03)**

(45) Mention de la délivrance du brevet :
**17.06.81 Bulletin 81/24**

(84) Etats contractants désignés :
**DE GB NL SE**

(56) Documents cités :
**FR - A - 1 592 633**
**US - A - 3 102 953**
**US - A - 3 644 742**

(73) Titulaire : **THOMSON-CSF**
**173, Boulevard Haussmann**
**F-75360 Paris Cedex 08 (FR)**

(72) Inventeur : **Pircher, Georges**
**"THOMSON-CSF" - SCPI 173, bld Haussmann**
**F-75630 Paris Cédex 08 (FR)**

(74) Mandataire : **Turlèque, Clotilde et al**
**"THOMSON-CSF" - SCPI 173, bld Haussmann**
**F-75360 Paris Cedex 08 (FR)**

EP 0 007 827 B1

Imprimerie Jouve, 17, rue du Louvre, 75001 Paris, France

## Gyromètre à laser

L'invention se rapporte aux gyromètres à laser grâce auxquels on détermine une vitesse angulaire par la mesure de la différence de phase entre deux faisceaux lumineux cohérents guidés, dans une fibre optique enroulée, dans le sens de la rotation dont on mesure la vitesse et en sens inverse.

Les gyromètres de ce type effectuent généralement une mesure interférométrique du déphasage, les faisceaux émergeant des deux extrémités de la fibre étant recombinés, ce qui établit un état d'interférence qui est fonction de la vitesse angulaire du dispositif. Un détecteur quadratique recueillant ce faisceau délivre un signal caractérisant l'intensité lumineuse. Cette intensité est directement liée au déphasage, donc à la vitesse angulaire.

Pour obtenir une relation linéaire entre l'intensité détectée et le déphasage, on introduit un déphasage fixe de $\pi/2$ entre les ondes. Un tel déphasage est délicat à réaliser. Par ailleurs, le déphasage lié à la rotation est très faible et toute dissymétrie dans le montage entraîne des déphasages parasites dont les fluctuations d'ordre thermique ou mécanique créent un bruit additionnel important, ce qui entraîne une perte de sensibilité sur la mesure de la vitesse. Les deux faisceaux lumineux destinés à entrer aux deux extrémités de la fibre sont obtenus par la séparation d'un faisceau unique issu d'un laser. La séparation, puis la recombinaison, après propagation dans la fibre, de ces deux faisceaux s'effectue généralement au moyen d'une lame semi-transparente dont les facteurs de transmission et de réflexion sont judicieusement choisis.

L'invention permet de remédier aux inconvénients cités par un dispositif simple et admettant de nombreuses possibilités d'amélioration quant au rapport signal sur bruit et à la sensibilité aux dérives et fluctuations. Au lieu de réaliser une mesure interférométrique du déphasage, on utilise les propriétés de transformation de Fourier d'une lentille mince. Les deux rayonnements émergeant de la fibre, au lieu d'être mélangés, sont dirigés de façon à suivre des chemins parallèles contigus. Ils passent à travers une même lentille dont l'axe optique est compris dans le plan de séparation des deux rayonnements. Un détecteur mesure l'intensité au foyer de la lentille.

Pour obtenir un signal proportionnel au déphasage, il est prévu de produire une variation alternative de l'intensité détectée se superposant à la variation fixe liée au déphasage. Le gyromètre ainsi proposé peut aussi inclure un hétérodynage optique, en vue de diminuer le bruit propre du détecteur de lumière.

L'invention vise donc un gyromètre à laser comprenant une source laser monomode émettant un rayonnement monochromatique, un guide de lumière enroulé autour de l'axe de la rotation dont on désire mesurer la vitesse, des moyens de séparation du rayonnement permettant d'alimenter simultanément, à partir de ce rayonnement, les deux extrémités du guide, et des moyens optiques de détection destinés à mettre en évidence le déphasage produit par la rotation entre les rayonnements émergeant des deux extrémités du guide, caractérisé en ce que les moyens de séparation sont constitués d'un élément optique à deux faces réfléchissantes situées sur le trajet du rayonnement issu du laser, cet élément étant également situé sur le trajet des deux rayonnements émergeant des deux extrémités du guide, de façon à les diriger selon deux chemins distincts, contigus.

L'invention sera mieux comprise à l'aide de la description ci-après et des dessins qui s'y rapportent parmi lesquels :

— la figure 1 représente un schéma d'un gyromètre selon l'invention ;

— la figure 2 est un détail du faisceau lumineux à détecter ;

— la figure 3 représente un mode de réalisation des moyens de détection du déphasage ;

— la figure 4 comprend des courbes explicatives de la détection.

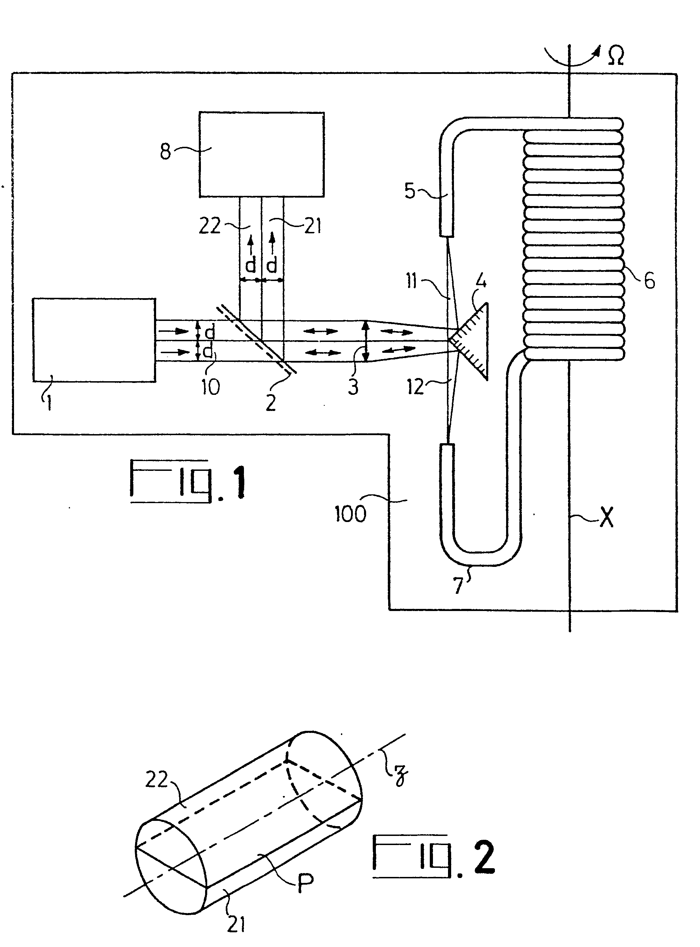

La figure 1 représente un schéma d'un gyromètre selon l'invention. L'ensemble du dispositif est compris dans un même bloc 100 tournant à la vitesse $\Omega$ autour d'un axe de rotation X. Dans le bloc 100 sont disposés : une source laser monomode 1, choisie de préférence de façon à avoir une longueur d'onde correspondant à un minimum d'absorption pour les fibres optiques. Ce laser émet un faisceau monochromatique 10 qui traverse une lame semi-transparente 2 et est concentré par une lentille 3. Le faisceau 10 est séparé en deux faisceaux de directions différentes 11 et 12 par un miroir 4 en forme de prisme dont le sommet est situé sur le rayon central du faisceau 10. Chacun des faisceaux 11 et 12 est dirigé vers l'une des extrémités (respectivement 5 et 7) d'une fibre optique enroulée autour de l'axe de rotation X. Ainsi, l'énergie des faisceaux 11 et 12 circule en sens inverse dans la fibre 6 et est recueillie respectivement aux extrémités 7 et 5. Le miroir 4 assure la réflexion des faisceaux émergeant des extrémités 7 et 5 sous la forme respectivement des faisceaux 21 et 22 qui empruntent en sens inverse les trajets parcourus respectivement par les faisceaux 12 et 11. Les faisceaux 21 et 22, forment deux parties adjacentes d'un faisceau 20, traversent la lentille 3 et sont réfléchis par la lame 2 en direction de moyens de détection 8 qui seront détaillés par la suite. L'ensemble du dispositif étant soumis à un mouvement rotatif dont on souhaite mesurer la vitesse angulaire $\Omega$, l'effet Sagnac se manifeste pour les faisceaux 11 et 12 se propageant dans la fibre enroulée 6. Ces deux faisceaux se propageant en sens inverse, ils ont en sortie une différence de marche proportionnelle à la vitesse $\Omega$ et à la surface délimitée par le parcours de la lumière dans la fibre. Les faisceaux 21 et 22 obtenus, décalés spatialement de la demi-largeur d du faisceau 10 issu du laser 1, ont entre eux un déphasage $\phi$. Ce déphasage est

mesuré par les moyens de détection 8.

Un détail du faisceau 20 constitué des deux parties 21 et 22, après réflexion sur la lame 2, est représenté sur la figure 2. Le faisceau 20 a une section circulaire et la surface de séparation des deux parties est un rectangle P. L'axe du faisceau 20, z, est l'axe médian du rectangle P.

Pour obtenir une séparation spatiale parfaite entre les faisceaux 21 et 22 et pour récupérer le maximum d'intensité lumineuse, il convient, non seulement de centrer parfaitement le miroir 4, mais aussi de choisir une lentille 3 d'ouverture numérique égale à celle de la fibre 6, et de disposer respectivement les extrémités 5 et 7 dans les plans conjugués du plan focal de la lentille 3 par rapport aux deux faces du miroir 4, les faces d'incidence des extrémités 5 et 7 coïncidant respectivement avec un plan d'onde des faisceaux 11 et 12.

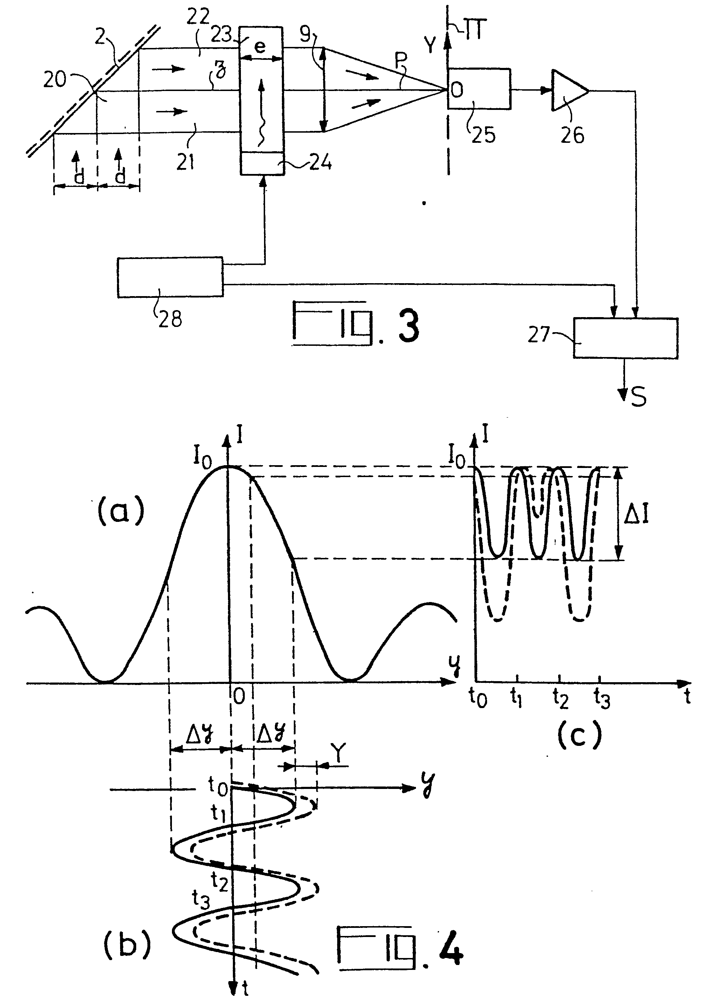

Sur la figure 3 sont représentés les éléments constitutifs des moyens de détection 8 permettant de déterminer le déphasage $\phi$. Le faisceau 20, après avoir traversé une ligne acoustique 23, est concentré par une lentille 9 et forme dans le plan focal $\pi$ de cette lentille une tache de diffraction. Pour la clarté de l'explication, on supposera tout d'abord que la ligne acoustique 23 n'est pas excitée ; elle n'influe donc pas sur le fonctionnement du dispositif. L'axe optique de la lentille 9 coïncide avec l'axe z du faisceau 20.

Un détecteur de lumière 25 est placé dans le plan focal $\pi$ et centré sur l'axe z. Il fournit donc un signal proportionnel à l'intensité lumineuse, c'est-à-dire au carré de l'amplitude lumineuse, au point 0, intersection de l'axe z avec le plan $\pi$. Ce signal est ensuite amplifié par un amplificateur 26 dont la sortie est reliée à un démodulateur synchrone 27 dont le rôle sera exposé plus loin en liaison avec celui de la ligne acoustique 23.

Lorsque le déphasage $\phi$ est nul, le faisceau 20 est un faisceau isotrope et la tache de diffraction obtenue dans le plan $\pi$ est celle qui résulte du passage d'une onde plane dans une pupille circulaire, c'est-à-dire une tache brillante centrée sur l'axe, entourée d'anneaux équidistants de moins en moins brillants. La courbe de variation de l'intensité lumineuse I en fonction de l'abscisse sur un axe y situé dans le plan $\pi$, perpendiculaire à z et perpendiculaire au plan de séparation P est représentée sur la figure 4 en (a), aux alentours du point 0.

Lorsque le déphasage $\phi$ n'est pas nul, on observe une déformation de la tache de diffraction qui, aux alentours du point 0 se traduit par un décalage de la tache centrale brillante. Le point d'intensité maximale se trouve décalé sur l'axe y d'une quantité Y qui dépend de $\phi$ et l'intensité détectée en y = 0 diminue lorsque la valeur absolue de $\phi$ augmente. Cette variation d'intensité en y = 0 est malheureusement très faible car les déphasages mis en jeu sont eux-mêmes très faibles. D'autre part, le signe du déphasage n'influe pas sur cette variation d'intensité. Pour obtenir une meilleure sensibilité et une indication sur le sens du déphasage, on utilise la ligne acoustique mentionnée plus haut. La ligne 23 est excitée par un transducteur 24 alimenté par un générateur 28 délivrant un signal sinusoïdal de fréquence f. Cette fréquence f est choisie, en fonction de caractéristiques du matériau formant la ligne 23, de façon que la longueur d'onde $\lambda$ de l'onde acoustique générée dans le matériau soit égale au diamètre du faisceau : 2d. On peut utiliser la ligne acoustique avec des ondes progressives ou des ondes stationnaires. La suite de la description concernera l'utilisation en ondes stationnaires, car on obtient ainsi des variations d'indices beaucoup plus élevées qu'en ondes progressives, pour un même signal électrique d'excitation. On a donc prévu à l'extrémité de la ligne opposée au transducteur, des moyens réfléchissant les ondes acoustiques. La disposition de la ligne acoustique 23 par rapport au faisceau 20 est telle que la direction de propagation des ondes acoustiques soit perpendiculaire à la surface P, c'est-à-dire parallèle à l'axe y. La longueur d'onde acoustique étant égale à la largeur du faisceau, on a un nœud de vibration aux bords du faisceau 20 et sur l'axe z. Les variations d'indice dues à l'onde acoustique sont égales et opposées pour deux points symétriques par rapport à l'axe z. Pour tout point d'abscisse a sur l'axe y, l'origine étant prise sur l'axe z, la variation d'indice $\delta n$ par rapport à l'indice au repos $n_0$ varie à la fréquence f avec le temps t : $\delta n = \delta n_0 . \sin (2 \pi ft) . \sin(2\pi a/\lambda)$ $\delta n_0$ étant la variation maximale d'indice obtenue par l'onde acoustique. Il en résulte un déphasage de l'onde lumineuse dû au passage dans la ligne :

$$\delta\phi = \frac{2\pi a}{\dfrac{\lambda}{n_0}} \delta n, \quad \lambda \text{ étant la longueur d'onde de}$$

l'onde lumineuse. Ce déphasage variant avec l'abscisse a, on obtient à tout instant une tranformation de la tache de diffraction dans le plan $\pi$, de façon semblable à l'effet produit par un déphasage fixe $\phi$ entre les faisceaux 21 et 22. Toutefois, les ordres de grandeur sont différents puisque le déphasage $\phi$ est très faible (de l'ordre de $10^{-3}$ rad.), alors que la valeur maximale du déphasage $\delta\phi$ produit par la ligne peut être beaucoup plus importante. On peut cependant considérer que, dans ce cas encore, on aboutit à un déplacement du maximum de la courbe de diffraction telle que représentée en (a) sur la figure 4.

Pour mieux saisir le phénomène, on peut assimiler le déplacement de la courbe de diffraction par rapport à un détecteur fixe centré sur le point 0 à un déplacement du détecteur dans le plan $\pi$, la courbe restant fixe. On voit que lorsque le détecteur se déplace, l'intensité détectée varie. Les courbes de la figure 4 représentées en (b) et (c) illustrent les variations en fonction du temps, respectivement de la position du détecteur sur l'axe y et de l'intensité détectée, en traits pleins pour un déphasage $\phi$ nul et en pointillés pour un déphasage $\phi$ non nul, l'effet dû à ce déphasage ayant été fortement amplifié, pour la clarté de la figure. On voit, en (b), que pour $\phi = 0$, le détecteur se déplace de façon symétrique autour du point 0 avec une amplitude de déplacement Δy liée à δn₀ donc à l'amplitude du signal d'excitation provenant du générateur 28. Pour φ ≠ 0 on obtient une courbe de déplacement semblable à la précédente, mais dont le maximum est décalé d'une quantité Y dont l'amplitude et le signe dépendent de φ. La courbe représentée en (c) montre que pour φ ≠ 0, on obtient une variation d'intensité d'amplitude ΔI à la fréquence 2f. La valeur de Δy donc celle de ΔI peuvent être réglées en agissant sur le générateur 28. Il est préférable d'avoir de grandes variations d'intensité, par exemple de l'ordre de I₀/2, I₀ étant la valeur du maximum de la courbe de diffraction.

Pour φ ≠ 0, on obtient une variation d'intensité périodique décomposable en une composante continue, une composante de fréquence f croissante avec φ, et une composante de fréquence 2f.

Pour obtenir un signal utilisable, on effectue une détection synchrone du signal émis par le détecteur 25. Le démodulateur synchrone 27 assure la suppression de la composante continue du signal issu de l'amplificateur 26, qui est proportionnel à l'intensité détectée, et le filtrage autour de la fréquence f permettant d'éliminer les composantes ne se situant pas dans une bande de fréquences centrée sur la fréquence f, notamment le bruit et les composantes harmoniques. Le signal obtenu est un signal sinusoïdal de fréquence f. Le démodulateur 27 reçoit également un signal issu du générateur 28 en phase avec l'excitation de la ligne acoustique, mais dont le déphasage avec le signal détecté dépend du déphasage φ. Le signal S obtenu est donc un signal continu qui, pour des déphasages φ assez faibles, peut être proportionnel à φ. On a ainsi réalisé une mesure de φ, en éliminant les bruits haute-fréquence.

On peut encore améliorer le rapport signal à bruit en réalisant un hétérodynage optique, c'est-à-dire en mélangeant le faisceau 20 qui entre dans les moyens de détection 8 avec une onde lumineuse de fréquence d'oscillation locale F. On peut ainsi éliminer les bruits dits « en 1 » du détecteur de lumière 25. La fréquence optique F peut par exemple être créée par transposition de la fréquence optique du laser grâce à un modulateur acoustique.

## Revendications

1. Gyromètre à laser comprenant une source laser monomode (1) émettant un rayonnement monochromatique, un guide de lumière (6) enroulé autour de l'axe de la rotation (X) dont on désire mesurer la vitesse, des moyens de séparation du rayonnement permettant d'alimenter simultanément, à partir de ce rayonnement, les deux extrémités (5, 7) du guide, et des moyens optiques de détection (8) destinés à mettre en évidence le déphasage produit par la rotation entre les rayonnements émergeant des deux extrémités du guide, caractérisé en ce que les moyens de séparation sont constitués d'un élément optique (4) à deux faces réfléchissantes situées sur le trajet du rayonnement issu du laser, cet élément étant également situé sur le trajet des deux rayonnements émergeant les deux extrémités du guide, de façon à les diriger selon deux chemins distincts (21, 22), contigus.

2. Gyromètre selon la revendication 1, caractérisé en ce que l'élément optique (4) a la forme d'un prisme dont l'arête entre les deux faces réfléchissantes est située dans un plan médian du rayonnement issu du laser, des moyens collimateurs (3) étant situés sur le trajet des rayonnements réfléchis par l'élément optique de façon à former deux faisceaux parallèles.

3. Gyromètre selon la revendication 2, caractérisé en ce que les moyens de mesure comprennent une lentille (9) placée sur le trajet des deux faisceaux et un détecteur de lumière (25) situé dans le plan focal (π) de la lentille.

4. Gyromètre selon la revendication 3, caractérisé en ce que les moyens de mesure comprennent en outre des moyens acousto-optiques (23) interposés sur le trajet des deux rayonnements au voisinage de la pupille de la lentille (9) produisant des déphasages périodiques entre les deux rayonnements, provoquant un déplacement alternatif de la tache de diffraction devant le détecteur de lumière (25), à une fréquence prédéterminée f, et des moyens de démodulation synchrone (27) fournissant une indication sur la valeur et le sens du déphase dû à la rotation entre les deux rayonnements.

5. Gyromètre selon la revendication 4, caractérisé en ce que les moyens acousto-optiques (23) comprennent une ligne acoustique munie d'un transducteur d'ondes acoustiques (24) et un générateur (28) délivrant un signal de fréquence f pour exciter le transducteur, de façon à produire des vibrations acoustiques en opposition de phase dans les deux parties de la ligne acoustique respectivement traversées par les deux rayonnements.

6. Gyromètre selon la revendication 5, caractérisé en ce que la ligne acoustique (23) est munie de moyens réfléchissants, placés à l'extrémité de la ligne opposée au transducteur (24), permettant d'y établir un état d'ondes stationnaires.

## Claims

1. A laser gyrometer comprising a monomode laser source (1) emitting a monochromatic radiation, a light guide (6) wound about the axis (X) of the rotation, the speed of which is to be measured, radiation separating means adapted to feed simultaneously from said radiation the two ends (5, 7) of said guide, and optical detection means (8) adapted to determine the phase shift produced by the rotation between the radiations issuing from the two ends of the guide, characterized in that said separating means are constituted by an optical element (4) having two reflecting surfaces located in the path of the radiation issuing from the laser, said element also being located in the path of the two radiations issuing from the two ends of the guide, so as to direct said radiations along two distinct adjacent paths (21, 22).

2. A gyrometer according to claim 1, characterized in that said optical element (4) has the form of a prism wherein that edge which is located between the two reflecting surfaces is placed in a median plane of the radiation issuing from the laser, while collimating means (3) are located in the path of the radiation reflected by the optical element, so as to form two parallel beams.

3. A gyrometer according to claim 2, characterized in that the measuring means comprise a lens (9) located in the path of the two beams, and a light detector (25) located in the focal plane ($\pi$) of the lens.

4. A gyrometer according to claim 3, characterized in that the measuring means further comprise acoustico-optical means (23) interposed in that path of the two radiations in the vicinity of the pupil of the lens (9) producing periodical phase-shifting between said two radiations, causing the diffraction spot to be displaced alternatively in front of the light detector (25) at a predetermined frequency f, and synchronous demodulation means (27) providing an indication of the magnitude and the direction of the phase shift produced between the two radiations by said rotation.

5. A gyrometer according to claim 4, characterized in that the acoustico-optical means (23) comprise an acoustic line provided with an acoustic wave transducer (24) and a generator for producing a signal with a frequency f for exciting the transducer so as to produce oppositely phased acoustic vibrations in the two sections of the acoustic line through which the two radiations are transmitted, respectively.

6. A gyrometer according to claim 5, characterized in that said acoustic line (23) is provided with reflecting means located at the end of the line which is opposite to the transducer (24), and adapted to establish therein a stationary wave condition.

**Ansprüche**

1. Laser-Drehzahlmesser mit einer eine monochromatische Strahlung erzeugenden monomodalen Laserquelle (1), einem um die Achse (X) der zu messenden Drehbewegung herumgewundenen Lichtleiter (6), Strahlungstrennmitteln zur gleichzeitigen Beschickung der beiden Enden (5, 7) des Lichtleiters mit dieser Strahlung, sowie mit optischen Detektormitteln zur Bestimmung der durch die Drehbewegung zwischen den aus den Enden des Lichtleiters austretenden Strahlungen hervorgerufenen Phasenverschiebung, dadurch gekennzeichnet, dass die Strahlungstrennmittel aus einem optischen Element (4) bestehen, welches zwei auf der Bahn der aus dem Laser austretenden Strahlung angeordnete reflektierende Oberflächen aufweist und ferner ebenfalls auf der Bahn der beiden aus den beiden Enden des Lichtleiters austretenden Strahlungen angeordnet ist, derart, dass es diese beiden Strahlungen in zwei getrennte, benachbarte Strahlenbahnen (21, 22) leitet.

2. Drehzahlmesser nach Anspruch 1, dadurch gekennzeichnet, dass das optische Element (4) aus einem Prisma besteht, dessen zwischen den beiden reflektierenden Oberflächen gelegene Kante in einer Mittelebene der aus dem laser austretenden Strahlung liegt, wobei Ausrichtmittel (3) auf der Bahn der vom optischen Element reflektierten Strahlungen angeordnet sind, um zwei parallele Starhlenbündel zu formen.

3. Drehzahlmesser nach Anspruch 2, dadurch gekennzeichnet, dass die Messmittel eine auf der Bahn der beiden Strahlenbündel angeordnete Linse (9) sowie einen in der Fokalebene ($\pi$) der Linse angeordneten Lichtdetektor (25) aufweisen.

4. Drehzahlmesser nach Anspruch 3, dadurch gekennzeichnet, dass die Messmittel ferner auf der Bahn der beiden Strahlungen in Nähe der Pupille der Linse (9) angeordnete akustisch-optische Mittel (23) aufweisen, welche zwischen den beiden Strahlungen periodische Phasenverschiebungen erzeugen, derart, dass der Diffraktionsfleck vor dem Lichtdetektor (25) mit einer Frequenz f hin- und -herbewegt wird, sowie Synchrondemodulationsmittel (27), welche die Grösse und die Richtung der durch die Drehbewegung zwischen den beiden Strahlungen hervorgerufenen Phasenverschiebung anzeigen.

5. Drehzahlmesser nach Anspruch 4, dadurch gekennzeichnet, dass die akustisch-optischen Mittel (23) eine akustische Leitung mit einem Schallwellenwandler (24) und einem zwecks Erregung des Wandlers ein Signal mit Frequenz f erzeugenden Generator aufweisen, um gegenphasige akustische Schwingungen in den beiden Abschnitten der akustischen Leitung zu erzeugen, welche von je einer der beiden Strahlung durchquert werden.

6. Drehzahlmesser nach Anspruch 5, dadurch gekennzeichnet, dass die akustische Leitung (23) Reflektionsmittel aufweist, die an dem Wandler (24) entgegengesetzten Ende der Leitung angeordnet sind, derart, dass dort ein Zustand mit stehenden Wellen herbeiführbar ist.

Fig.1

Fig.2

Fig. 3

Fig. 4